# EUROPEAN PATENT SPECIFICATION

(11) **EP 2 832 809 B1**
(45) Date of publication and mention of the grant of the patent: **09.11.2016**
(21) Application number: 13769223.2
(22) Date of filing: 28.03.2013
(51) Int. Cl.: C09J 7/02, B60B 7/02, C09J 11/06, C09J 133/04, C08K 5/29, C08K 5/3492

(54) **ADHESIVE FILM FOR PROTECTING AUTOMOBILE WHEEL**
HAFTFOLIE ZUM SCHUTZ VON KRAFTFAHRZEUGRÄDERN
FILM ADHÉSIF DE PROTECTION D'UNE ROUE D'AUTOMOBILE

(30) Priority: 30.03.2012 JP 2012080214
(43) Date of publication of application: 04.02.2015
(73) Proprietor: Lintec Corporation, Tokyo 173-0001 (JP)
(72) Inventor: KASE Takamasa, Tokyo 173-0001 (JP); TEZUNA Atsushi, Tokyo 173-0001 (JP); TAKAHASHI Yoichi, Tokyo 173-0001 (JP); MIYATAKE Yusuke, Tokyo 173-0001 (JP)
(74) Representative: Beckmann, Claus
(86) International application number: PCT/JP2013/059413
(87) International publication number: WO 2013/147101

(56) References cited:
- EP-A1- 2 425 967
- EP-A1- 2 426 182
- EP-A2- 2 135 906
- WO-A1-2005/090098
- WO-A1-2010/125972
- JP-A- 2003 119 446
- JP-A- 2006 035 914

## Description

### TECHNICAL FIELD

The invention relates to a pressure-sensitive adhesive film for protecting an automotive wheel (hereinafter referred to as "automotive wheel protection pressure-sensitive adhesive film").

### BACKGROUND ART

An automotive wheel such as an aluminum wheel has a problem in that water enters the wheel from the outside, and rusts a disc brake when transporting or keeping an automobile. Therefore, a pressure-sensitive adhesive film is bonded to the surface of the wheel in order to prevent a situation in which water enters the wheel.

Such a wheel protection pressure-sensitive adhesive film is required to exhibit adhesion sufficient to maintain a bonded state until the automobile is delivered. The pressure-sensitive adhesive film is also required to be easily removed (peeled) after delivery, and not to allow an adhesive residue to remain on the surface of the wheel after removal.

In recent years, an automobile may normally be transported over a long distance before delivery, or displayed for a long time outdoors. In such a case, it may be difficult to remove the pressure-sensitive adhesive film, or an adhesive residue may remain after removing the pressure-sensitive adhesive film when an automotive wheel is protected using a known pressure-sensitive adhesive film.

In view of the above situation, an improvement in performance of the automotive wheel protection pressure-sensitive adhesive film has been desired.

Patent Document 1 discloses an automotive wheel protective film that includes a pressure-sensitive adhesive layer and a base layer, the pressure-sensitive adhesive layer being formed of a pressure-sensitive adhesive that includes a (meth)acrylic-based polymer obtained using a specific monomer, and a crosslinking agent.

### RELATED-ART DOCUMENT

### PATENT DOCUMENT

Patent Document 1: JP-A-2010-253889 (US2012/045641A1)

### SUMMARY OF THE INVENTION

### TECHNICAL PROBLEM

The invention was conceived in view of the above situation. An object of the invention is to provide an automotive wheel protection pressure-sensitive adhesive film that exhibits sufficient adhesion when transporting or displaying an automobile, can be easily removed even after being exposed to an outdoor environment, and rarely allows an adhesive residue to remain.

### SOLUTION TO PROBLEM

The inventors of the invention conducted extensive studies in order to achieve the above object. As a result, the inventors found that a pressure-sensitive adhesive film that includes a pressure-sensitive adhesive layer formed of an acrylic-based pressure-sensitive adhesive that includes a (meth)acrylic-based polymer, a crosslinking agent, and a UV absorber, the (meth)acrylic-based polymer including a repeating unit derived from a monomer that includes a crosslinkable functional group, and a repeating unit derived from a C₁₋₁₄ alkyl ester of (meth)acrylic acid, has the desired performance, and is suitable as an automotive wheel protection pressure-sensitive adhesive film. This finding has led to the completion of the invention.

One aspect of the invention provides the following automotive wheel protection pressure-sensitive adhesive film comprising a base layer and a pressure-sensitive adhesive layer, the pressure-sensitive adhesive layer being formed of an acrylic-based pressure-sensitive adhesive that includes at least a (meth)acrylic-based polymer, a crosslinking agent, and a UV absorber, the (meth)acrylic-based polymer including a repeating unit derived from a monomer that includes a crosslinkable functional group, and a repeating unit derived from a Ci-u alkyl ester of (meth)acrylic acid, wherein the content of the repeating unit derived from the monomer that includes a crosslinkable functional group is 0.01 to 30 mass%, the content of the crosslinking agent in the acrylic-based pressure-sensitive adhesive is 0.1 to 10 parts by mass based on 100 parts by mass of a solid included in and the content of the UV absorber in the acrylic-based pressure-sensitive adhesive is 2.2 to 10 parts by mass based on 100 parts by mass of a solid included in the acrylic-based polymer.

### ADVANTAGEOUS EFFECTS OF THE INVENTION

One aspect of the invention thus provides an automotive wheel protection pressure-sensitive adhesive film that exhibits sufficient adhesion when transporting or displaying an automobile, can be easily removed even after being exposed to an outdoor environment, and rarely allows an adhesive residue to remain.

### DESCRIPTION OF EMBODIMENTS

An automotive wheel protection pressure-sensitive adhesive film (hereinafter may be referred to as "pressure-sensitive adhesive film") according to one embodiment of the invention includes a base layer and a pressure-sensitive adhesive layer, the pressure-sensitive adhesive layer being formed of an acrylic-based pressure-sensitive adhesive that includes at least a (meth)acrylic-based polymer, a crosslinking agent, and a UV absorber, the (meth)acrylic-based polymer including a repeating unit derived from a monomer that includes a crosslinkable functional group, and a repeating unit derived from a C₁₋₁₄ alkyl ester of (meth)acrylic acid.

### Base layer

The base layer included in the pressure-sensitive adhesive film according to one embodiment of the invention is not particularly limited as long as the base layer can support the pressure-sensitive adhesive layer, and prevent entrance of water and dust when the pressure-sensitive adhesive film according to one embodiment of the invention is bonded to a wheel. A known resin film or the like may be used as the base layer.

Examples of a raw material for forming the resin film include a polyolefin resin such as a polyethylene resin and a polypropylene resin; a polyester resin such as a polyethylene terephthalate resin and a polynaphthalene terephthalate resin; a polyvinyl chloride resin; a polycarbonate resin; and the like. Among these, a polyolefin resin is preferable, and a polyethylene resin is particularly preferable due to excellent flexibility and an excellent capability to follow a curved surface.

Examples of the polyethylene resin include an ethylene homopolymer, and a copolymer of ethylene and an additional monomer that is copolymerizable with ethylene. The copolymer may be a random copolymer, or may be a block copolymer. It is preferable that the copolymer include repeating units derived from ethylene in a ratio of 50 mass% or more based on the total repeating units.

Examples of the additional monomer that is copolymerizable with ethylene include α-olefins having 3 to 16 carbon atoms, such as propylene, 1-butene, 3-methyl-1-butene, 4-methyl-1-pentene, 1-hexene, 1-octene, and 1-decene.

A low-density polyethylene resin is preferable as the polyethylene resin. The low-density polyethylene resin may be obtained by a known method (e.g., high-pressure method) using ethylene (or ethylene and an α-olefin) as a raw material. The density of the low-density polyethylene resin is normally 0.910 to 0.940 g/cm³. A small amount of high-density polyethylene may be added to the low-density polyethylene resin in order to improve the properties of the low-density polyethylene resin.

The thickness of the base layer is normally 20 to 200 µm, and preferably 30 to 100 µm.

The base layer may include an additive such as a UV absorber, a light stabilizer, or an antioxidant.

### Pressure-sensitive adhesive layer

The pressure-sensitive adhesive layer included in the pressure-sensitive adhesive film according to one embodiment of the invention is formed of the acrylic-based pressure-sensitive adhesive that includes at least a (meth)acrylic-based polymer, a crosslinking agent, and a UV absorber, the (meth)acrylic-based polymer including a repeating unit derived from a monomer that includes a crosslinkable functional group, and a repeating unit derived from a C₁₋₁₄ alkyl ester of (meth)acrylic acid.

Note that the expression "(meth)acrylic" used herein refers to "acrylic" or "methacrylic". The term "crosslinkable functional group" used herein refers to a group that can react with a crosslinking agent to form a crosslinked structure.

The (meth)acrylic-based polymer used in connection with one embodiment of the invention is a copolymer that includes a repeating unit derived from a monomer that includes a crosslinkable functional group, and a repeating unit derived from a C₁₋₁₄ alkyl ester of (meth)acrylic acid. The copolymer may be a random copolymer, or may be a block copolymer.

When the (meth)acrylic-based polymer includes a repeating unit derived from a monomer that includes a crosslinkable functional group, a crosslinked structure is formed in the pressure-sensitive adhesive layer. This makes it possible to obtain a pressure-sensitive adhesive film that can be easily removed after use, and rarely allows an adhesive residue to remain.

Examples of the monomer that includes a crosslinkable functional group include a (meth)acrylic-based monomer that includes a hydroxyl group, an amide group, or a carboxyl group.

Examples of the (meth)acrylic-based monomer that includes a hydroxyl group include (meth)acrylates that include a hydroxyl group, such as 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate.

The number of carbon atoms of the (meth)acrylic-based monomer that includes a hydroxyl group is normally 4 to 16, and preferably 4 to 10.

Examples of the (meth)acrylic-based monomer that includes an amide group include (meth)acrylamide, N-(methoxymethyl)(meth)acrylamide, N-(ethoxymethyl)(meth)acrylamide, N-(propoxymethyl)(meth)acrylamide, N-(butoxymethyl)(meth)acrylamide, N-methylol(meth)acrylamide,

The number of carbon atoms of the (meth)acrylic-based monomer that includes an amide group is normally 3 to 10, and preferably 3 to 8.

Examples of the (meth)acrylic-based monomer that includes a carboxyl group include acrylic acid, methacrylic acid.

The number of carbon atoms of the (meth)acrylic-based monomer that includes a carboxyl group is normally 3 to 10, and preferably 3 to 8.

Among these, a (meth)acrylic-based monomer that includes a hydroxyl group or an amide group is preferable, and 2-hydroxyethyl acrylate or methacrylamide is more preferable, since these compounds exhibit excellent crosslinking reactivity, and a pressure-sensitive adhesive film that rarely allows an adhesive residue to remain can be obtained.

These monomers that include a crosslinkable functional group may be used either alone or in combination. It is particularly preferable to use a (meth)acrylic-based monomer that includes a hydroxyl group and a (meth)acrylic-based monomer that includes an amide group in combination since a pressure-sensitive adhesive film that rarely allows an adhesive residue to remain can be advantageously obtained.

The content of the repeating unit derived from the monomer that includes a crosslinkable functional group in the (meth)acrylic-based polymer is preferably 0.01 to 30 mass%, and more preferably 0.1 to 20 mass%, based on the total repeating units.

When using a (meth)acrylic-based monomer that includes a hydroxyl group and a (meth)acrylic-based monomer that includes an amide group in combination, the (meth)acrylic-based monomer that includes a hydroxyl group and the (meth)acrylic-based monomer that includes an amide group are preferably used in a mass ratio of 50:1 to 1:50, more preferably 5:1 to 1:5, and still more preferably 1:1.5 to 1:3. When the (meth)acrylic-based monomer that includes a hydroxyl group and the (meth)acrylic-based monomer that includes an amide group are used in a mass ratio within the above range, a pressure-sensitive adhesive film that rarely allows an adhesive residue to remain can be obtained, and the pot life can be improved.

The (meth)acrylic-based polymer includes a repeating unit derived from a C₁₋₁₄ alkyl ester of (meth)acrylic acid. When the (meth)acrylic-based polymer includes a repeating unit derived from a C₁₋₁₄ alkyl ester of (meth)acrylic acid, the acrylic-based pressure-sensitive adhesive exhibits improved adhesion. This makes it possible to obtain a pressure-sensitive adhesive film that exhibits sufficient adhesion when transporting or displaying an automobile.

Examples of the C₁₋₁₄ alkyl ester of (meth)acrylic acid include (meth)acrylates such as methyl (meth)acrylate, ethyl (meth)acrylate, propyl (meth)acrylate, n-butyl (meth)acrylate, isobutyl (meth)acrylate, sec-butyl (meth)acrylate, t-butyl (meth)acrylate, pentyl (meth)acrylate, hexyl (meth)acrylate, octyl (meth)acrylate, and 2-ethylhexyl (meth)acrylate.

Among these, a C₂₋₈ alkyl ester of (meth)acrylic acid is preferable since a pressure-sensitive adhesive film that exhibits excellent adhesion can be obtained.

These C₁₋₁₄ alkyl esters of (meth)acrylic acid may be used either alone or in combination.

The content of the repeating unit derived from a C₁₋₁₄ alkyl ester of (meth)acrylic acid in the (meth)acrylic-based polymer is preferably 65 to 95 mass%, and more preferably 70 to 90 mass%, based on the total repeating units.

The (meth)acrylic-based polymer may include a repeating unit derived from an additional monomer.

Examples of the additional monomer include vinyl esters such as vinyl acetate and vinyl propionate; nitrile compounds such as acrylonitrile and methacrylonitrile; aromatic vinyl compounds such as styrene and vinylpyridine.

These additional monomers may be used either alone or in combination.

The (meth)acrylic-based polymer may be produced by a known polymerization method using the monomer that includes a crosslinkable functional group, the C₁₋₄ alkyl ester of (meth)acrylic acid, and an optional additional monomer. For example, the (meth)acrylic-based polymer may be produced by reacting these monomers in the presence of an initiator. Examples of the initiator include a peroxide-based initiator and an azo-based initiator.

The weight average molecular weight of the (meth)acrylic-based polymer is preferably 100,000 to 5,000,000, and more preferably 500,000 to 3,000,000.

Note that the weight average molecular weight refers to a polystyrene-reduced weight average molecular weight determined by gel permeation chromatography (GPC).

The crosslinking agent included in the acrylic-based pressure-sensitive adhesive is not particularly limited as long as the crosslinking agent can react with the crosslinkable functional group included in the acrylic-based polymer to form a crosslinked structure.

Examples of the crosslinking agent include a polyisocyanate-based crosslinking agent, an epoxy-based crosslinking agent, an aziridine-based crosslinking agent, a chelate-based crosslinking agent.

Among these, a polyisocyanate-based crosslinking agent is preferable since a pressure-sensitive adhesive film that exhibits excellent weatherability can be obtained.

Examples of the polyisocyanate-based crosslinking agent include aromatic diisocyanate compounds such as tolylene diisocyanate (TDI), xylylene diisocyanate (XDI), and diphenylmethane diisocyanate; aliphatic or alicyclic diisocyanate compounds such as hexamethylene diisocyanate (HMDI) and isophorone diisocyanate (IPDI); a tolylene diisocyanate trimer adduct of trimethylolpropane; triisocyanate compounds such as triphenylmethane triisocyanate and methylenebis(4-phenylmethane) triisocyanate.

Examples of the epoxy-based crosslinking agent include ethylene glycol glycidyl ether, 1,6-hexanediol glycidyl ether, trimethylolpropane diglycidyl ether, diglycidyl aniline, diglycidyl amine.

Examples of the aziridine-based crosslinking agent include 2,4,6-tris(1-aziridinyl)-1,3,5-triazine, tris[1-(2-methyl)aziridinyl]phosphine oxide, hexa[1-(2-methyl)aziridinyl]triphosphatriazine, and the like.

Examples of the chelate-based crosslinking agent include an aluminum chelate, a titanium chelate. These crosslinking agents may be used either alone or in combination.

The acrylic-based pressure-sensitive adhesive normally includes the crosslinking agent in an amount of 0.1 to 10 parts by mass, and preferably 0.2 to 5 parts by mass, based on 100 parts by mass of a solid included in the acrylic-based polymer.

The amount of crosslinks formed in the pressure-sensitive adhesive layer can be adjusted by adjusting the amount of the crosslinking agent, and the pressure-sensitive adhesive film exhibits the desired pressure-sensitive adhesive properties with respect to various wheels.

The UV absorber included in the acrylic-based pressure-sensitive adhesive is not particularly limited as long as the UV absorber absorbs ultraviolet rays (particularly light within a wavelength region of 200 to 380 nm).

Examples of the UV absorber include triazine-based UV absorbers such as 2-[4,6-bis(2,4-dimethylphenyl)-1,3,5-triazin-2-yl]-5-hydroxyphenyl, 2-(2,4-dihydroxyphenyl)-4,6-bis-(2,4-dimethylphenyl)-1,3-5-triazine, 2,4-bis[2-hydroxy-4-butoxyphenyl]-6(2,4-dibutoxyphenyl)-1,3,5-triazine, and tris(hydroxyphenyl)triazine;
hindered amine-based UV absorbers such as bis(2,2,6,6-tetramethyl-4-piperidyl) sebacate, bis(1,2,2,6,6-pentamethyl-4-piperidyl) sebacate, bis(1,2,2,6,6-pentamethyl-4-piperidyl)-2-(3,5-di-t-butyl-4-hydroxybenzyl)-2-n-butyl malonate, tetrakis(2,2,6,6-tetramethyl-4-piperidyl)-1,2,3,4-butane tetracarboxylate, and tetrakis(1,2,2,6,6-pentamethyl-4-piperidyl)-1,2,3,4-butane tetracarboxylate;
benzophenone-based UV absorbers such as 2-hydroxy-4-methoxybenzophenone, 2-hydroxy-4-n-octyloxybenzophenone, 2-hydroxy-4-methoxy-2'-carboxybenzophenone, 2,4-dihydroxybenzophenone, 2,2'-dihydroxy-4,4'-dimethoxybenzophenone, 2-hydroxy-4-benzoyloxybenzophenone, 2,2'-dihydroxy-4-methoxybenzophenone, 2-hydroxy-4-methoxy-5-sulfonebenzophenone, 2,2',4,4'-tetrahydroxybenzophenone, sodium 2,2'-dihydroxy-4,4'-dimethoxy-5-sulfobenzophenone, 4-dodecyloxy-2-hydroxybenzophenone, and 2-hydroxy-5-chlorobenzophenone;
hydroquinone-based UV absorbers such as hydroquinone and hydroquinone disalicylate; salicylic acid-based UV absorbers such as phenyl salicylate and p-octylphenyl salicylate; cyanoacrylate-based UV absorbers such as ethyl 2-cyano-3,3-diphenylacrylate and 2-ethylhexyl 2-cyano-3,3-diphenylacrylate; triazole-based UV absorbers.

These UV absorbers may be used either alone or in combination.

Among these, a triazole-based UV absorber having a benzotriazole skeleton or a benzophenone-based UV absorber having a benzophenone skeleton is preferable since a pressure-sensitive adhesive film that exhibits excellent weatherability can be obtained.

A compound represented by the following formula (I) is preferable as the triazole-based UV absorber.

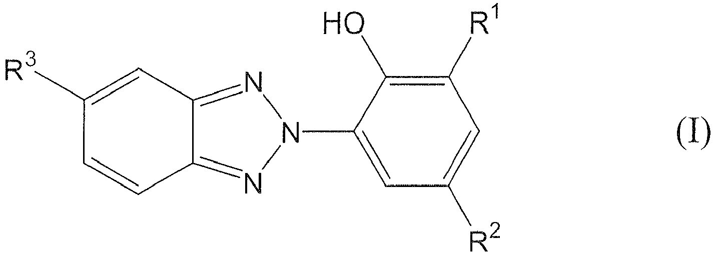

R¹ and R² in the formula (I) are independently an organic group having 1 to 25 (preferably 3 to 15, and more preferably 4 to 10) carbon atoms.

Examples of the organic group represented by R¹ and R² include substituted or unsubstituted hydrocarbon groups.

Examples of the unsubstituted hydrocarbon groups include alkyl groups having 1 to 25 carbon atoms, such as a methyl group, an ethyl group, an n-propyl group, an isopropyl group, an n-butyl group, an s-butyl group, an isobutyl group, a t-butyl group, a t-amyl group (1,1-dimethylpropyl group), a 1,1-dimethyl-3,3-dimethylbutyl group, a heptyl group, an octyl group, a nonyl group, and a decyl group; cycloalkyl groups having 3 to 25 carbon atoms, such as a cyclopentyl group and a cyclohexyl group; alkenyl groups having 2 to 25 carbon atoms, such as a vinyl group and an allyl group; alkylidene groups having 2 to 25 carbon atoms, such as an ethylidene group and a propylidene group; aromatic groups having 6 to 25 carbon atoms, such as a phenyl group, a naphthyl group, and an anthracenyl group; groups obtained by combining these hydrocarbon groups, such as a 1-methyl-1-phenylethyl group.

Examples of a substituent that may substitute the unsubstituted hydrocarbon groups include halogen atoms such as a fluorine atom, a chlorine atom, a bromine atom, and an iodine atom; alkoxy groups having 1 to 5 carbon atoms such as a methoxy group, an ethoxy group, an n-propoxy group, an isopropoxy group, an n-butoxy group, a sec-butoxy group, a t-butoxy group, and an n-pentyloxy group.

The organic group represented by R¹ and R² may include an oxygen atom, a nitrogen atom, or a sulfur atom in the hydrocarbon group. Specifically, the organic group represented by R¹ and R² may be a group in which two or more hydrocarbon groups are bonded through a linking group.

Examples of the linking group include a carbonyl group (-C(=O)-), a carbonyloxy group (-C(=O)-O-), a sulfonyl group (-SO₂-), a sulfonyl ester group (-SO₂-O-), an ether group (-O-), a thioether group (-S-), an imino group (-NH-), an amide group (-NHC(=O)-).

The total number of carbon atoms included in the group represented by R¹ and the group represented by R² is 4 to 50, preferably 10 to 30, and particularly preferably 10 to 20.

When the total number of carbon atoms included in the group represented by R¹ and the group represented by R² is 4 or more, the UV absorber rarely bleeds out from the pressure-sensitive adhesive layer even when the pressure-sensitive adhesive film is bonded to a wheel for a long time. When the total number of carbon atoms included in the group represented by R¹ and the group represented by R² is 50 or less, the UV absorber is easily dispersed uniformly in the pressure-sensitive adhesive.

R¹ and R² may independently be a t-butyl group, a t-amyl group, a 1,1,3,3-tetrametylbutyl group, a 1-methyl-1-phenylethyl group, or a 2-(octyloxycarbonyl)ethyl group (provided that a case where both R¹ and R² are a t-butyl group is excluded).

R³ is a substituted or unsubstituted alkyl group having 1 to 5 carbon atoms, a halogen atom, or a hydrogen atom.

Examples of the unsubstituted alkyl group having 1 to 5 carbon atoms represented by R³ include a methyl group, an ethyl group, an n-propyl group, an isopropyl group, an n-butyl group, an s-butyl group, an isobutyl group, a t-butyl group, and an n-pentyl group.

Examples of a substituent that may substitute the unsubstituted alkyl group having 1 to 5 carbon atoms include those mentioned above in connection with R¹ and R².

Examples of the halogen atom represented by R³ include a fluorine atom, a chlorine atom, a bromine atom, an iodine atom. Among these, a chlorine atom is preferable.

Specific examples of a preferable compound represented by the formula (I) include 2-(2-hydroxy-3,5-di-t-amyl phenyl)benzotriazole, 2-[2-hydroxy-3-(1-methyl-1-phenylethyl)-5-(1,1,3,3-tetramethylbutyl)phenyl]benzotriaz ole, 2-[2-hydroxy-3-t-butyl-5-[2-(octyloxycarbonyl)ethyl]phenyl]benzotriazole.

Examples of the benzophenone-based UV absorber include 2,4-dihydroxybenzophenone, 2-hydroxy-4-methoxybenzophenone, 2-hydroxy-4-n-octyloxybenzophenone, 2-hydroxy-4-n-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone, bis(2-methoxy-4-hydroxy-5-benzoylphenyl)methane, 2,2',4,4'-tetrahydroxybenzophenone, 2-hydroxy-4-methacryloyloxybenzophenone (radically polymerizable monomer).

Among these, 2-hydroxy-4-n-octyloxybenzophenone and 2,2'-dihydroxy-4-methoxybenzophenone are particularly preferable.

The molecular weight of the UV absorber is normally 280 to 3000, preferably 300 to 1000, and more preferably 320 to 670. When the molecular weight of the UV absorber is 280 or more, the UV absorber rarely bleeds out from the pressure-sensitive adhesive layer even when the pressure-sensitive adhesive film is bonded to a wheel for a long time. When the molecular weight of the UV absorber is 3000 or less, the UV absorber is easily dispersed uniformly in the pressure-sensitive adhesive.

The acrylic-based pressure-sensitive adhesive normally includes the UV absorber in an amount of 2.2 to 10 parts by mass, preferably 3 to 8 parts by mass, and more preferably 4 to 7 parts by mass, based on 100 parts by mass of a solid included in the acrylic-based polymer.

When the acrylic-based pressure-sensitive adhesive includes the UV absorber in an amount within the above range, a pressure-sensitive adhesive sheet that exhibits excellent weatherability can be obtained.

The acrylic-based pressure-sensitive adhesive may include a known additive and the like. Examples of a known additive include a light stabilizer, an antioxidant, a tackifier, a softener, an aging preventive, a filler, a coloring agent.

The acrylic-based pressure-sensitive adhesive may be prepared by dissolving or dispersing the (meth)acrylic-based polymer, the crosslinking agent, the UV absorber, and an optional additive in an appropriate solvent, for example.

Examples of the solvent used to prepare the acrylic-based pressure-sensitive adhesive include ester-based solvents such as ethyl acetate; ketone-based solvents such as acetone; ether-based solvents such as diethyl ether; aromatic hydrocarbon-based solvents such as toluene and xylene.

The acrylic-based pressure-sensitive adhesive may also be prepared by adding the crosslinking agent, the UV absorber, to a reaction mixture obtained when synthesizing the (meth)acrylic-based polymer.

The pressure-sensitive adhesive layer may be obtained by applying the acrylic-based pressure-sensitive adhesive, and drying the resulting film.

The thickness of the pressure-sensitive adhesive layer is not particularly limited, but is normally 5 to 100 µm, and preferably 10 to 60 µm.

### Automotive wheel protection pressure-sensitive adhesive film

The pressure-sensitive adhesive film according to one embodiment of the invention includes the base layer and the pressure-sensitive adhesive layer. The pressure-sensitive adhesive film may further include a release sheet that protects the pressure-sensitive adhesive layer.

A known release sheet may be used as the release sheet. Examples of the release sheet include a paper substrate such as high-quality paper, clay-coated paper, and glassine paper; laminated paper prepared by laminating a polyolefin resin (e.g., polyethylene resin or polypropylene resin) film on a paper substrate; a paper substrate that is sealed with cellulose, starch, polyvinyl alcohol, an acrylic-styrene resin, or the like; and a film substrate formed of polyethylene, polypropylene, polyester, or the like.

The thickness of the release sheet is not particularly limited, and may be appropriately selected.

The resulting pressure-sensitive adhesive sheet may be wound in the shape of a roll, and stored without using a release sheet. In this case, it is preferable to subject one side (i.e., the side on which the pressure-sensitive adhesive layer is not formed) of the resin film used as the base layer to a release treatment.

The pressure-sensitive adhesive film according to one embodiment of the invention may be produced using an arbitrary method. For example, the pressure-sensitive adhesive film according to one embodiment of the invention may be produced by applying the acrylic-based pressure-sensitive adhesive to one side of the resin film used as the base layer, drying the resulting film, and optionally stacking a release sheet on the pressure-sensitive adhesive layer.

Alternatively, a release sheet may be provided separately, the acrylic-based pressure-sensitive adhesive may be applied to the release agent layer of the release sheet, and the resulting film may be dried, and laminated to the resin film used as the base layer to obtain the pressure-sensitive adhesive film according to one embodiment of the invention.

The acrylic-based pressure-sensitive adhesive may be applied using an arbitrary method. For example, the acrylic-based pressure-sensitive adhesive may be applied using a known coater such as an air knife coater, a blade coater, a bar coater, a gravure coater, a roll coater, a roll knife coater, a curtain coater, a die coater, a knife coater, a screen coater, a Meyer bar coater, or a kiss coater.

The pressure-sensitive adhesive film according to one embodiment of the invention includes the pressure-sensitive adhesive layer that is formed using the acrylic-based pressure-sensitive adhesive that includes the (meth)acrylic-based polymer, the crosslinking agent, and the UV absorber.

Therefore, the pressure-sensitive adhesive film according to one embodiment of the invention exhibits excellent performance as an automotive wheel protection film. Specifically, the pressure-sensitive adhesive film according to one embodiment of the invention exhibits sufficient adhesion when transporting or displaying an automobile, can be easily removed even after being exposed to an outdoor environment, and rarely allows an adhesive residue to remain.

The pressure-sensitive adhesive film according to one embodiment of the invention exhibits excellent weatherability. The weathering test results demonstrate that the pressure-sensitive adhesive film according to one embodiment of the invention exhibits excellent weatherability. Specifically, the pressure-sensitive adhesive film according to one embodiment of the invention normally has a spectral transmittance in a wavelength region of 200 to 380 nm of 20% or less, preferably 10% or less, and more preferably 5% or less, after being subjected to a weathering test that applies light having a wavelength of 300 to 400 nm for 500 hours at an irradiance of 60 W/m².

It is considered that a pressure-sensitive adhesive film in which the UV absorber sufficiently functions has a low spectral transmittance in a wavelength region of 200 to 380 nm, and exhibits excellent weatherability.

The weathering test results demonstrate that the pressure-sensitive adhesive film according to one embodiment of the invention maintains excellent weatherability even after being subjected to the weathering test.

Therefore, the automotive wheel protection pressure-sensitive adhesive film according to one embodiment of the invention is particularly suitably used under severe conditions under which the pressure-sensitive adhesive film exposed to an outdoor environment for a long time.

When using the automotive wheel protection pressure-sensitive adhesive film according to one embodiment of the invention, the pressure-sensitive adhesive layer of the pressure-sensitive adhesive film is bonded to the surface of a wheel. Since the pressure-sensitive adhesive film according to one embodiment of the invention exhibits sufficient adhesion, it is possible to easily prevent a situation in which water enters the wheel.

The pressure-sensitive adhesive film according to one embodiment of the invention can be easily removed after use without allowing a considerable adhesive residue to remain.

### EXAMPLES

The invention is further described below by way of examples and comparative examples. Note that the invention is not limited to the following examples.

The details of the compounds used in the examples and comparative examples are shown below.

### (1) Monomer

2EHA: 2-ethylhexyl acrylate
BA: butyl acrylate
EA: ethyl acrylate
VAc: vinyl acetate
AAc: acrylic acid
HEA: 2-hydroxyethyl acrylate
mAAM: methacrylamide

### (2) Crosslinking agent

Polyisocyanate-based crosslinking agent: Coronate L manufactured by Nippon Polyurethane Industry Co., Ltd.

Epoxy-based crosslinking agent: BXX6308TF manufactured by Toyo Ink Mfg. Co., Ltd.

Aziridine-based crosslinking agent: BXX5172 manufactured by Toyo Ink Mfg. Co., Ltd.

### (3) UV absorber

Triazole-based UV absorber 1: Tinuvin 928 manufactured by BASF, 2-[2-hydroxy-3-(1-methyl-1-phenylethyl)-5-(1,1,3,3-tetramethylbutyl)phenyl]benzotriaz ole, Mw: 441 Triazole-based UV absorber 2: Tinuvin 328 manufactured by BASF, 2-(2-hydroxy-3,5-di-t-amylphenyl)benzotriazole, Mw: 352 Triazole-based UV absorber 3: Tinuvin 384-2 manufactured by BASF, 2-[2-hydroxy-3-t-butyl-5-[2-(octyloxycarbonyl)ethyl]phenyl]benzotriazole, Mw: 452 Triazole-based UV absorber 4: Tinuvin PS manufactured by BASF, 2-(2-hydroxy-5-t-butylphenyl)benzotriazole, Mw: 267 Triazine-based UV absorber 1: Tinuvin 400 manufactured by BASF, Mw: 647 Hindered amine-based UV absorber 1: Tinuvin 765 manufactured by BASF, Mw: 509 Benzophenone-based UV absorber 1: Cyasorb UV-24 manufactured by Cytec Industries Inc., 2,2'-dihydroxy-4-methoxybenzophenone, Mw: 244 Benzophenone-based UV absorber 2: CHIMASSORB 81 manufactured by BASF Japan Ltd., 2-hydroxy-4-n-octyloxybenzophenone, Mw: 326

### Example 1

A reactor equipped with a thermometer, a stirrer, a reflux condenser, and a nitrogen gas inlet tube was charged with 30 parts by mass of 2EHA, 30 parts by mass of BA, 25 parts by mass of EA, 15 parts by mass of VAc, 3.5 parts by mass of AAc, 0.2 parts by mass of HEA, and 100 parts by mass of ethyl acetate. The monomers were copolymerized in the presence of an initiator (azobisisobutyronitrile) to obtain a reaction mixture including an acrylic-based polymer having a weight average molecular weight of 980,000.

2 parts by mass (1.9 parts by mass based on 100 parts by mass of a solid included in the acrylic-based polymer) of the polyisocyanate-based crosslinking agent, and 4.4 parts by mass (4.2 parts by mass based on 100 parts by mass of a solid included in the acrylic-based polymer) of the triazole-based UV absorber 1 were added to the reaction mixture to prepare an acrylic-based pressure-sensitive adhesive 1.

The acrylic-based pressure-sensitive adhesive 1 was applied to one side of a low-density polyethylene resin film (thickness: 50 µm) at room temperature (25°C) using an applicator so that the thickness after drying was 25 µm, and dried at 40°C to form a pressure-sensitive adhesive layer.

A release layer of a release sheet ("KGM-11 S" manufactured by Lintec Corporation) was laminated to the pressure-sensitive adhesive layer using a laminator to produce a pressure-sensitive adhesive film 1.

### Examples 2 to 18 and Comparative Example 1

An acrylic-based pressure-sensitive adhesive was prepared using the components shown in Table 1, and a pressure-sensitive adhesive film (pressure-sensitive adhesive films 2 to 19) was produced in the same manner as in Example 1, except that the resulting acrylic-based pressure-sensitive adhesive was used.

### (1) Adhesion test

Each of the pressure-sensitive adhesive films 1 to 19 was bonded to a stainless steel sheet (SUS304) in accordance with JIS Z 2307 (ISO 29862 to 29864), and peeled at a peeling angle of 180° and a peeling speed of 300 mm/min when 30 minutes had elapsed to measure adhesion (N/25 mm). The measurement results are shown in Table 1.

### (2) Weathering test

Each of the pressure-sensitive adhesive films 1 to 19 was bonded to a stainless steel sheet (SUS304) in accordance with JIS Z 2307 (ISO 29862 to 29864) to prepare a specimen. The specimen was subjected to a weathering test under the following conditions using a Super Xenon Weather Meter SX-75 manufactured by Suga Test Instruments Co., Ltd.
Black panel temperature: 63°C
Irradiance: 60 W/m² (300 to 400 nm)
Water spraying: 18 min/120 min
Irradiation surface: surface of base sheet
Irradiation time: 500 hours

The adhesion was measured by the above method using the specimen subjected to the weathering test. The specimen was observed after peeling the pressure-sensitive adhesive film to determine the presence or absence of an adhesive residue. The evaluation standard in Table 1 is shown below.
A: No adhesive residue was observed.
B: Some adhesive residue was observed.
C: An adhesive residue was observed.

The spectral transmittance (%) of the specimen subjected to the weathering test in a wavelength region of 200 to 380 nm was measured using a UV/VIS spectrophotometer ("UV-3100" manufactured by Shimadzu Corporation).

Note that the amount of each monomer shown in Table 1 refers to the amount (parts by mass) of each monomer used when effecting polymerization. The amount of each crosslinking agent and the amount of each UV absorber refer to the amount (parts by mass) of solid based on 100 parts by mass of the solid resin included in the acrylic-based polymer.

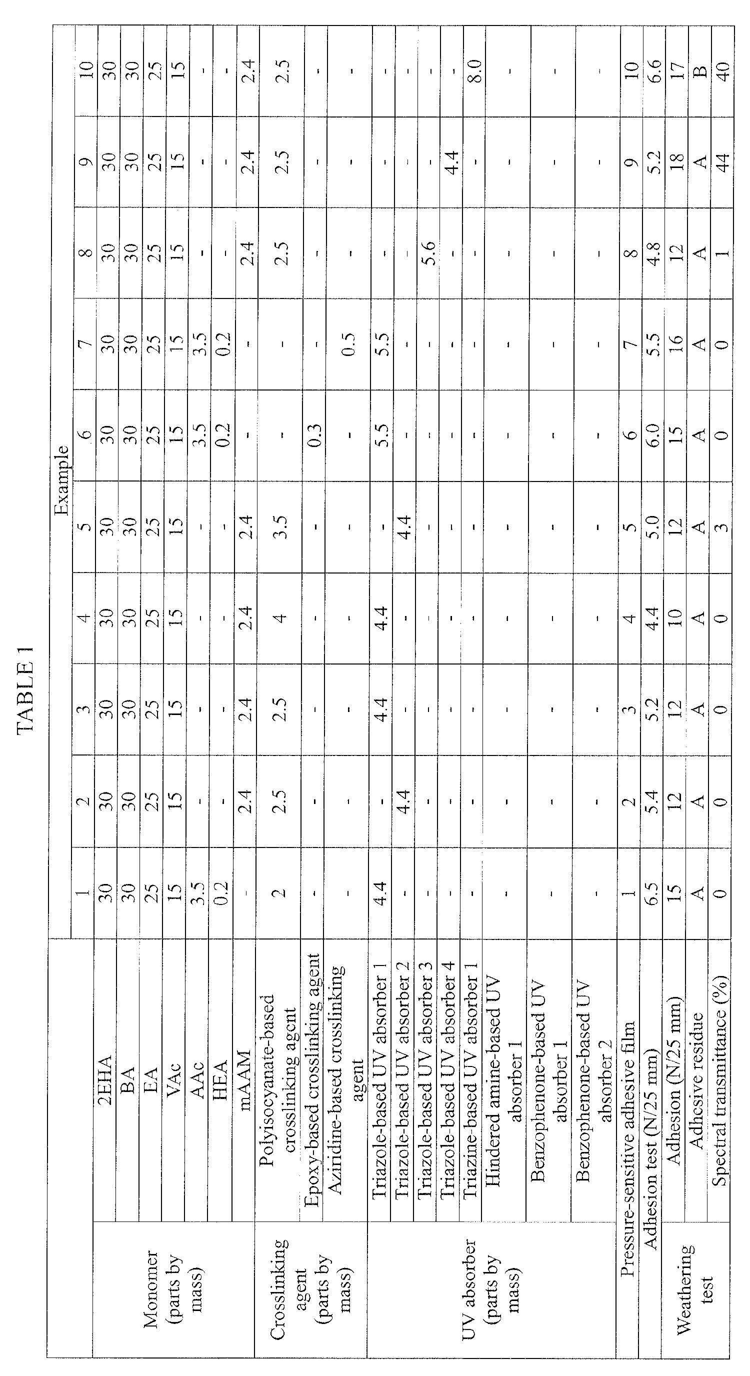

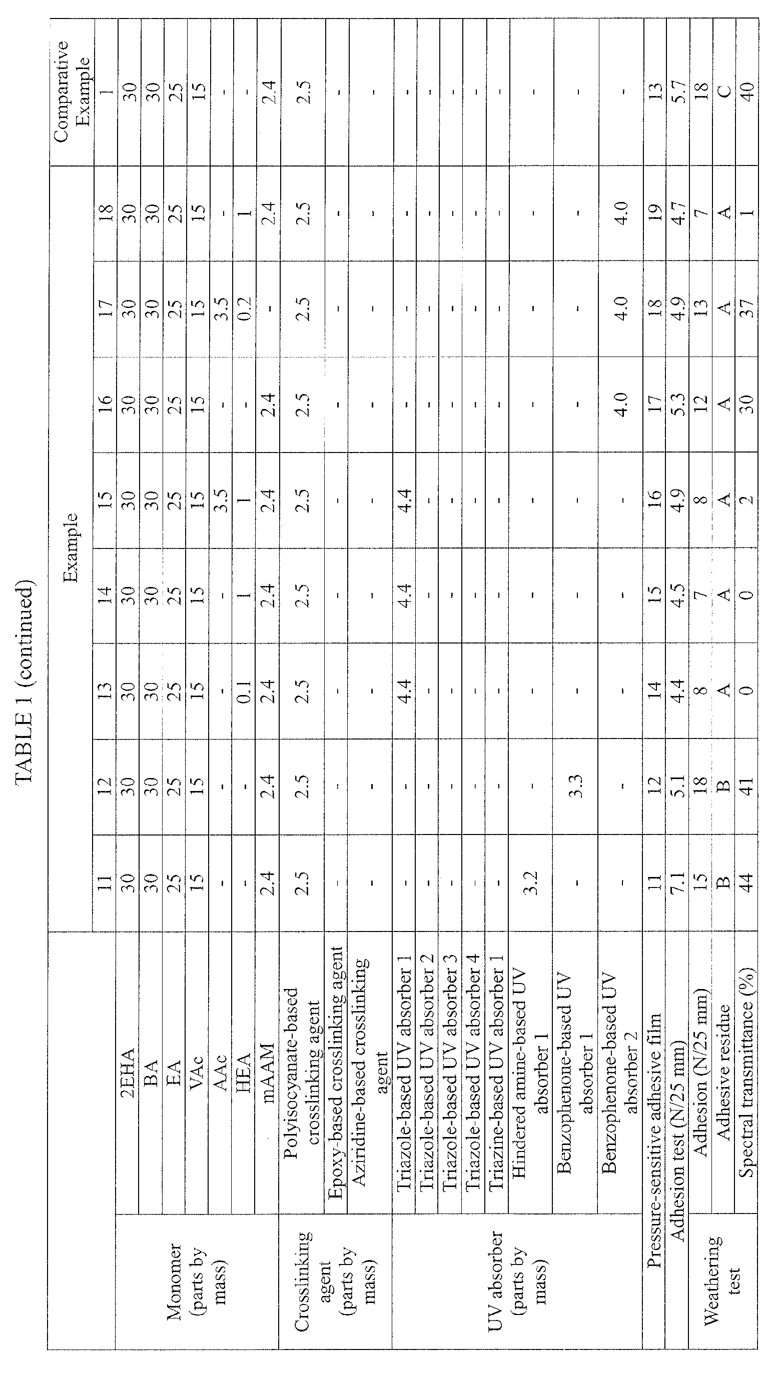

The following were confirmed from the results shown in Table 1.

The pressure-sensitive adhesive films 1 to 12 and 14 to 19 of Examples 1 to 18 in which the UV absorber was included in the pressure-sensitive adhesive layer showed no (or only a small amount of) adhesive residue after being subjected to the weathering test. In particular, the pressure-sensitive adhesive films 1 to 9 of Examples 1 to 9 in which the triazole-based UV absorber was used, and the pressure-sensitive adhesive films 17 to 19 of Examples 16 to 18 in which the benzophenone-based UV absorber was used, showed no adhesive residue.

The pressure-sensitive adhesive films 1 to 12 and 14 to 19 of Examples 1 to 18 exhibited sufficient adhesion before being subjected to the weathering test.

Specifically, the pressure-sensitive adhesive films 1 to 12 and 14 to 19 of Examples 1 to 18 exhibited adhesion and removability in combination.

On the other hand, the pressure-sensitive adhesive film 13 of Comparative Example 1 in which a UV absorber was not included in the pressure-sensitive adhesive layer showed an adhesive residue after being subjected to the weathering test.

## Claims

1. An automotive wheel protection pressure-sensitive adhesive film comprising a base layer and a pressure-sensitive adhesive layer,
the pressure-sensitive adhesive layer being formed of an acrylic-based pressure-sensitive adhesive that includes at least a (meth)acrylic-based polymer, a crosslinking agent, and a UV absorber, the (meth)acrylic-based polymer including a repeating unit derived from a monomer that includes a crosslinkable functional group, and a repeating unit derived from a C₁₋₁₄ alkyl ester of (meth)acrylic acid, wherein the content of the repeating unit derived from the monomer that includes a crosslinkable functional group is 0.01 to 30 mass%, the content of the crosslinking agent in the acrylic-based pressure-sensitive adhesive is 0.1 to 10 parts by mass based on 100 parts by mass of a solid included in and the content of the UV absorber in the acrylic-based pressure-sensitive adhesive is 2.2 to 10 parts by mass based on 100 parts by mass of a solid included in the acrylic-based polymer.

2. The automotive wheel protection pressure-sensitive adhesive film according to claim 1, wherein the UV absorber is a triazole-based UV absorber.

3. The automotive wheel protection pressure-sensitive adhesive film according to claim 2, wherein the triazole-based UV absorber is a compound represented by a formula (I), 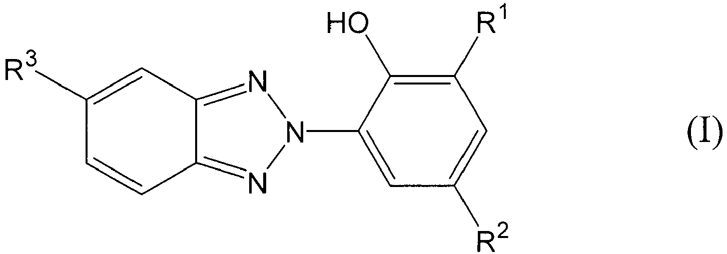 wherein R¹ and R² are independently an organic group having 1 to 25 carbon atoms, provided that the total number of carbon atoms included in the group represented by R¹ and the group represented by R² is 4 to 50, and R³ is a substituted or unsubstituted alkyl group having 1 to 5 carbon atoms, a halogen atom, or a hydrogen atom.

4. The automotive wheel protection pressure-sensitive adhesive film according to claim 1, wherein the UV absorber is a benzophenone-based UV absorber.

5. The automotive wheel protection pressure-sensitive adhesive film according to claim 1, wherein the UV absorber is a compound having a molecular weight of 280 to 3000.

6. The automotive wheel protection pressure-sensitive adhesive film according to claim 1, wherein the crosslinkable functional group is a hydroxyl group or an amide group.

7. The automotive wheel protection pressure-sensitive adhesive film according to claim 1, wherein the monomer that includes the crosslinkable functional group is a monomer that includes a hydroxyl group, and a monomer that includes an amide group.

8. The automotive wheel protection pressure-sensitive adhesive film according to claim 1, wherein the monomer that includes the crosslinkable functional group is methacrylamide.

9. The automotive wheel protection pressure-sensitive adhesive film according to claim 1, wherein the crosslinking agent is a polyisocyanate-based crosslinking agent.

10. The automotive wheel protection pressure-sensitive adhesive film according to claim 1, the pressure-sensitive adhesive film having a spectral transmittance in a wavelength region of 200 to 380 nm of 20% or less after being subjected to a weathering test that applies light having a wavelength of 300 to 400 nm for 500 hours at an irradiance of 60 W/m².

11. The automotive wheel protection pressure-sensitive adhesive film according to claim 1, wherein the thickness of the base layer is 20-200 µm and the thickness of the pressure-sensitive adhesive layer is 5-100 µm.

12. The automotive wheel protection pressure-sensitive adhesive film according to claim 1, wherein the base layer is a resin film and a raw material for forming the resin film is a resin selected from the group consisting of a polyolefin resin, a polyester resin, a polyvinyl chloride resin, and a polycarbonate resin.

## Patentansprüche

1. Drucksensitive Haftfolie zum Schutz von Kraftfahrzeugrädern, welche eine Basisschicht und eine drucksensitive Haftschicht umfasst,
wobei die drucksensitive Haftschicht gebildet wird aus einem Acryl-basierten drucksensitiven Klebstoff, welcher zumindest ein (Meth)acryl-basiertes Polymer, einen Vernetzer und ein UV-Absorptionsmittel einschließt, wobei das (Meth)acrylbasierte Polymer eine sich wiederholende Einheit, abgeleitet von einem Monomer, welches eine vernetzbare funktionelle Gruppe einschließt, und eine sich wiederholende Einheit, abgeleitet von einem C₁₋₁₄-Alkylester von (Meth)acrylsäure, einschließt, wobei der Gehalt der sich wiederholenden Einheit, abgeleitet von dem Monomer, welches eine vernetzbare funktionelle Gruppe einschließt, 0,01 bis 30 Gew.-% ist, der Gehalt des Vernetzers in dem Acryl-basierten drucksensitiven Klebstoff 0,1 bis 10 Gewichtsteile, basierend auf 100 Gewichtsteilen, eines beinhalteten Feststoffes ist und der Gehalt des UV-Absorptionsmittels in dem Acryl-basierten drucksensitiven Klebstoff 2,2 bis 10 Gewichtsteile, basierend auf 100 Gewichtsteilen eines in dem Acryl-basierten Polymer beinhalteten Feststoffs, ist.

2. Drucksensitive Haftfolie zum Schutz von Kraftfahrzeugrädern gemäß Anspruch 1, wobei das UV-Absorptionsmittel ein Triazol-basiertes UV-Absorptionsmittel ist.

3. Drucksensitive Haftfolie zum Schutz von Kraftfahrzeugrädern gemäß Anspruch 2, wobei das Triazol-basierte UV-Absorptionsmittel eine Verbindung, dargestellt durch eine Formel (I) ist, 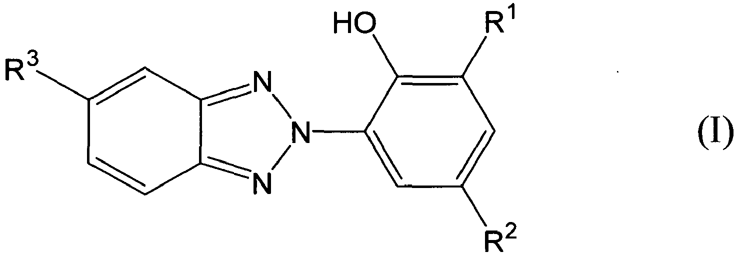 wobei R¹ und R² unabhängig eine organische Gruppe mit 1 bis 25 Kohlenstoffatomen sind, mit der Maßgabe, dass die Gesamtzahl der Kohlenstoffatome, welche in der Gruppe, dargestellt durch R¹, und der Gruppe, dargestellt durch R², beinhaltet ist, 4 bis 50 ist und wobei R³ eine substituierte oder unsubstituierte Alkylgruppe mit 1 bis 5 Kohlenstoffatomen, ein Halogenatom oder ein Wasserstoffatom ist.

4. Drucksensitive Haftfolie zum Schutz von Kraftfahrzeugrädern gemäß Anspruch 1, wobei das UV-Absorptionsmittel ein Benzophenon-basiertes UV-Absorptionsmittel ist.

5. Drucksensitive Haftfolie zum Schutz von Kraftfahrzeugrädern gemäß Anspruch 1, wobei das UV-Absorptionsmittel eine Verbindung mit einem Molekulargewicht von 280 bis 3000 ist.

6. Drucksensitive Haftfolie zum Schutz von Kraftfahrzeugrädern gemäß Anspruch 1, wobei die vernetzbare funktionelle Gruppe eine Hydroxylgruppe oder eine Amidgruppe ist.

7. Drucksensitive Haftfolie zum Schutz von Kraftfahrzeugrädern gemäß Anspruch 1, wobei das Monomer, welches die vernetzbare funktionelle Gruppe beinhaltet ein Monomer, welches eine Hydroxylgruppe beinhaltet, und ein Monomer, welches eine Amidgruppe beinhaltet, ist.

8. Drucksensitive Haftfolie zum Schutz von Kraftfahrzeugrädern gemäß Anspruch 1, wobei das Monomer, welches die vernetzbare funktionelle Gruppe beinhaltet, Methacrylamid ist.

9. Drucksensitive Haftfolie zum Schutz von Kraftfahrzeugrädern gemäß Anspruch 1, wobei der Vernetzer ein Vernetzer auf Polyisocyanatbasis ist.

10. Drucksensitive Haftfolie zum Schutz von Kraftfahrzeugrädern gemäß Anspruch 1, wobei die drucksensitive Haftfolie eine spektrale Transmission in einem Wellenlängenbereich von 200 bis 380 nm von 20% oder weniger nach Aussetzung in einem Bewitterungstest, welcher Licht mit einer Wellenlänge von 300 bis 400 nm für 500 Stunden bei einer Bestrahlungsstärke von 60 W/m² anwendet, hat.

11. Drucksensitive Haftfolie zum Schutz von Kraftfahrzeugrädern gemäß Anspruch 1, wobei die Dicke der Basisschicht 20-200 µm ist und die Dicke der drucksensitiven Haftschicht 5-100 µm ist.

12. Drucksensitive Haftfolie zum Schutz von Kraftfahrzeugrädern gemäß Anspruch 1, wobei die Basisschicht eine Harzfolie ist und ein Rohmaterial zur Bildung der Harzfolie ein Harz, ausgewählt aus der Gruppe, bestehend aus einem Polyolefinharz, einem Polyesterharz, einem Polyvinylchloridharz und einem Polycarbonatharz, ist.

## Revendications

1. Film adhésif sensible à la pression de protection d'une roue d'automobile comprenant une couche de base et une couche d'adhésif sensible à la pression, la couche d'adhésif sensible à la pression étant fabriquée à partir d'un adhésif sensible à la pression à base acrylique qui inclut au moins un polymère à base (méth)acrylique, un agent de réticulation et un absorbant d'UV, le polymère à base (méth)acrylique incluant un motif répétitif dérivé d'un monomère qui inclut un groupe fonctionnel réticulable, et un motif répétitif dérivé d'un ester alkylique en C₁ à C₁₄ d'acide (méth)acrylique, dans lequel la teneur du motif répétitif dérivé du monomère qui inclut un groupe fonctionnel réticulable est de 0,01 à 30 % en masse, la teneur de l'agent de réticulation dans l'adhésif sensible à la pression à base acrylique est de 0,1 à 10 parties en masse sur la base de 100 parties en masse d'un solide inclus et la teneur de l'absorbant d'UV dans l'adhésif sensible à la pression à base acrylique est de 2,2 à 10 parties en masse sur la base de 100 parties en masse d'un solide inclus dans le polymère à base acrylique.

2. Film adhésif sensible à la pression de protection d'une roue d'automobile selon la revendication 1, dans lequel l'absorbant d'UV est un absorbant d'UV à base de triazole.

3. Film adhésif sensible à la pression de protection d'une roue d'automobile selon la revendication 2, dans lequel l'absorbant d'UV à base de triazole est un composé représenté par une formule (I), 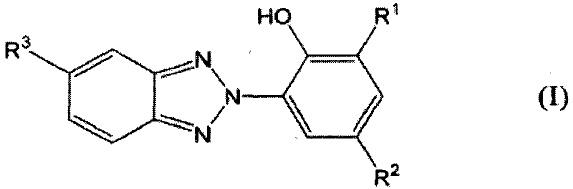 formule dans laquelle R¹ et R² représentent indépendamment un groupe organique comportant de 1 à 25 atomes de carbone, à condition que le nombre total d'atomes de carbone inclus dans le groupe représenté par R¹ et le groupe représenté par R² soit de 4 à 50 et R³ représente un groupe alkyle substitué ou non substitué comportant de 1 à 5 atomes de carbone, un atome d'halogène ou un atome d'hydrogène.

4. Film adhésif sensible à la pression de protection d'une roue d'automobile selon la revendication 1, dans lequel l'absorbant d'UV est un absorbant d'UV à base de benzophénone.

5. Film adhésif sensible à la pression de protection d'une roue d'automobile selon la revendication 1, dans lequel l'absorbant d'UV est un composé ayant un poids moléculaire de 280 à 3 000.

6. Film adhésif sensible à la pression de protection d'une roue d'automobile selon la revendication 1, dans lequel le groupe fonctionnel réticulable est un groupe hydroxyle ou un groupe amide.

7. Film adhésif sensible à la pression de protection d'une roue d'automobile selon la revendication 1, dans lequel le monomère qui inclut le groupe fonctionnel réticulable est un monomère qui inclut un groupe hydroxyle, et un monomère qui inclut un groupe amide.

8. Film adhésif sensible à la pression de protection d'une roue d'automobile selon la revendication 1, dans lequel le monomère qui inclut le groupe fonctionnel réticulable est le méthacrylamide.

9. Film adhésif sensible à la pression de protection d'une roue d'automobile selon la revendication 1, dans lequel l'agent de réticulation est un agent de réticulation à base de polyisocyanate.

10. Film adhésif sensible à la pression de protection d'une roue d'automobile selon la revendication 1, l'adhésif sensible à la pression à base acrylique ayant un facteur spectral de transmission dans une région de longueur d'onde de 200 à 380 nm inférieur ou égal à 20 % après avoir été soumis à un essai aux intempéries qui applique une lumière ayant une longueur d'onde de 300 à 400 nm pendant 500 heures à une irradiation de 60 W/m².

11. Film adhésif sensible à la pression de protection d'une roue d'automobile selon la revendication 1, dans lequel l'épaisseur de la couche de base est de 20 à 200 µm et l'épaisseur de la couche d'adhésif sensible à la pression est de 5 à 100 µm.

12. Film adhésif sensible à la pression de protection d'une roue d'automobile selon la revendication 1, dans lequel la couche de base est un film de résine et une matière première utilisée pour fabriquer le film de résine est une résine choisie dans le groupe constitué d'une résine de polyoléfine, d'une résine de polyester, d'une résine de chlorure de polyvinyle et d'une résine de polycarbonate.
